# EUROPEAN PATENT SPECIFICATION

(11) **EP 4 071 342 B1**
(45) Date of publication and mention of the grant of the patent: **01.01.2025**
(21) Application number: 22175604.2
(22) Date of filing: 09.06.2021
(51) Int. Cl.: F02K 1/72, F02K 1/60, F02C 7/20

(54) **TURBOFAN PROPULSION SYSTEM FOR AN AIRCRAFT WITH THRUST REVERSER SYSTEM AND RELATED THRUST REVERSAL METHOD**
TURBOFAN-ANTRIEBSSYSTEM FÜR EIN FLUGZEUG MIT SCHUBUMKEHRSYSTEM UND ENTSPRECHENDES SCHUBUMKEHRVERFAHREN
SYSTÈME DE PROPULSION DE RÉACTEUR À DOUBLE FLUX POUR UN AÉRONEF DOTÉ D'UN SYSTÈME D'INVERSEUR DE POUSSÉE ET PROCÉDÉ D'INVERSION DE POUSSÉE ASSOCIÉ

(30) Priority: 10.06.2020 IT 202000013846
(43) Date of publication of application: 12.10.2022
(62) Divisional of application: 21734504.0
(73) Proprietor: Leonardo S.p.A., 00195 Roma (IT)
(72) Inventor: POLI, Massimo, 21057 Olgiate Olona (Varese) (IT); VERCELLESI, Marco, 20131 Milano (Italy) (IT)
(74) Representative: Verdecchia, Valerio

(56) References cited:
- US-A1- 2014 061 332
- US-A1- 2019 284 952

## Description

### Technical field

The present invention relates to a turbofan propulsion system having a thrust reverser system for an aircraft and a related thrust reversal method, adapted to allow an at least partial reversal of the thrust provided by the turbofan propulsion system.

### Prior art

In the field of aircraft propulsion systems, and particularly with application to turbofan propulsion systems, the use of movable blocker doors to provide thrust reversal is generally known. This architecture relies on blocking the outflow of air through one or more blocker doors-often also known as "petals"-that are positioned to completely or partially occlude an air outflow duct. These petals are typically driven by a series of rods, which may be located in the outflow duct of the engine or embedded in the structure of the propulsion system. Generally, the thrust reverser system is composed of two parts, a fixed one and a translating one, which are connected by beams that have runners adapted to allow the relative movement of the translating structure with respect to the fixed structure. The relative movement of the two parts provides, through the rotation of a blocker door, the at least partial occlusion of the outflow duct, and, simultaneously, opens an outflow circumferential opening to the environment outside the propulsion system. It is also known to associate a plurality of guiding structures, i.e., a "cascade," aimed at guiding the aerodynamic flow out of said circumferential opening to said circumferential opening.

Examples of such thrust reverser systems are shown in U.S. Patent Applications US 2019/0032600 A1, US 2019/284952 A1 and US 2017/198658 A1.

Propulsion systems comprising thrust reverser systems according to the prior art just described, however, have several disadvantages.

First, the presence of so many movable components, arranged inside the outflow duct, and therefore having stringent structural constraints, makes the known thrust reverser systems heavy, expensive, difficult to make, and moreover makes rather frequent maintenance necessary.

In addition, the presence of blocker doors causes a plurality of aerodynamic discontinuities, transverse and inclined with respect to airflow.

Lastly, these known systems require a non-negligible amount of space, and their bulk makes any maintenance work on the substructure, systems, or the propulsion system engine itself inconvenient and slow. In particular, with the known thrust reverser systems it is not possible to open and inspect the fixed and movable structures of the thrust reverser system when the bypass duct has an O or ring cross section.

### Summary of invention

The object of the present invention is to provide a turbofan propulsion system having a thrust reverser system that does not have the disadvantages of the prior art.

A further object of the invention is to provide a method for thrust reversal of an aircraft turbofan propulsion system that does not have the disadvantages of the prior art.

Further objects of the invention are to provide a turbofan propulsion system comprising a thrust reverser system that is improved with respect to the prior art, and/or having fewer components, and/or wherein any bleeding of the occluded air stream is minimized, and/or wherein the acoustically treatable surface area is maximized, so as to significantly reduce acoustic emission with respect to the prior art.

This and other objects are fully achieved according to the present invention by a turbofan propulsion system as defined in claim 1, and by a method for thrust reversal of a turbofan propulsion system of an aircraft as defined in the appended claim 15.

Advantageous embodiments of the invention are specified in the dependent claims, the content of which is to be understood as an integral part of the description that follows.

In summary, according to a first aspect of the invention, the invention is based on the idea of providing a turbofan propulsion system comprising a thrust reverser system having a movable mechanism for making an opening adapted to allow the outflow of air to the external environment and an iris mechanism adapted to at least partially occlude the air passage.

Lastly, in summary, according to a further aspect of the invention, the invention is based on the idea of providing a method of thrust reversal in a turbofan propulsion system having a bypass duct, wherein the thrust reversal is provided by an outflow of air from the bypass duct to the external environment by means of a radial opening in conjunction with the at least partial occlusion of the bypass duct by means of an iris mechanism.

Advantageously, the thrust reverser system is configured in such a way that the movement of the translating structure between the stowed position and the opening position and the movement of said plurality of blades of the iris mechanism between said rest configuration and said deployed configuration are driven in a coordinated manner.

Preferably, the thrust reverser system further comprises a plurality of outflow guides, preferably arranged integral in translation with the translating structure, and adapted to guide the outflow of air from the bypass duct to the external environment through the circumferential opening defined between a translating structure and a fixed structure when the translating structure is in an opening position.

### Brief description of the drawings

The features and advantages of this invention will be clarified by the detailed description that follows, given purely by way of non-limiting example in reference to the accompanying drawings, wherein:

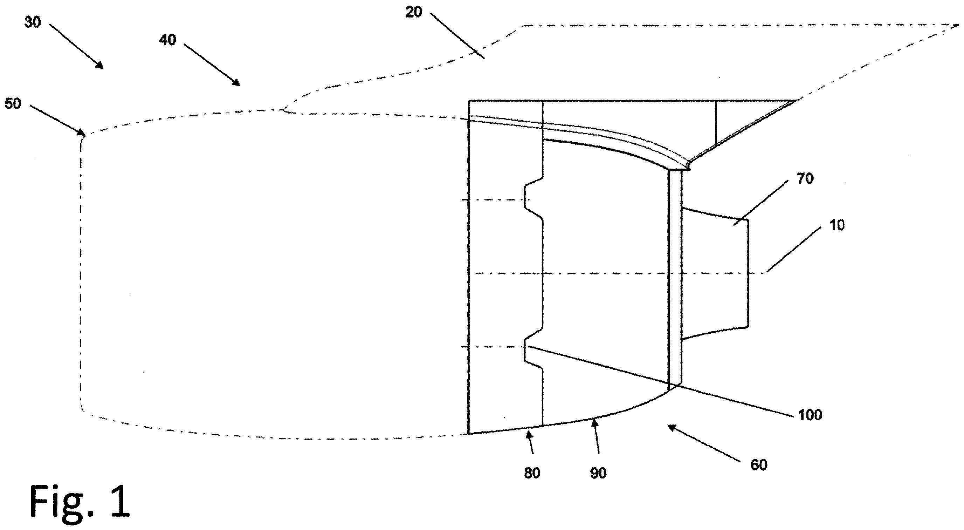

Fig. 1 is a side view of the turbofan propulsion system, according to an embodiment of the invention, with the translating structure shown in the stowed position;

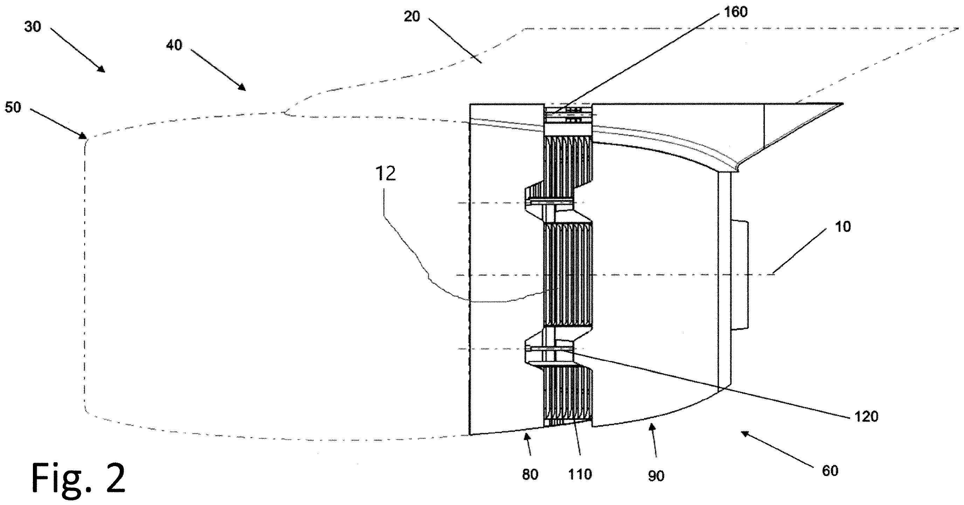

Fig. 2 is a side view of the turbofan propulsion system of Fig. 1, with the translating structure shown in the opening position;
Fig. 3 is a detailed side view in cross section of the thrust reverser system that is part of the turbofan propulsion system of Fig. 1, with the translating structure shown in the stowed position;
Fig. 4 is a detailed side view in cross section of the thrust reverser system in Fig. 3, with the translating structure shown in the opening position;
Fig. 5 is a perspective view of the turbofan propulsion system in Fig. 1, with the translating structure shown in the stowed position;
Fig. 6 is a perspective view of the turbofan propulsion system in Fig. 1, with the translating structure shown in the opening position;
Fig. 7 is a front detailed view of the iris mechanism of the thrust reverser system in Fig. 3, wherein the blades are shown in the rest configuration;
Fig. 8 is a front detailed view of the iris mechanism in Fig. 7, wherein the blades are shown in the deployed configuration;
Fig. 9A through 9D are detailed perspective views of a portion of the iris mechanism in Fig. 7 at four successive moments of movement from the rest to the deployed configuration;
Fig. 10 is a view similar to Fig. 3, but representing an embodiment wherein the inner panels are made with a thickness always greater than 5 millimeters;
Fig. 11 is a side perspective view of the turbofan propulsion system, according to an embodiment of the invention, with the translating structure shown in the opening position, wherein the translating structure and the movable structure are made as half-shells, one of which is respectively shown partially open; and
Fig. 12 is a perspective view of the turbofan propulsion system in Fig. 11 taken from another direction.

### Detailed description

In general, in the present description and the appended claims, terms such as "axial," "axial direction," "axially," and the like, refer to the direction indicated by the axis of the core engine of the turbofan propulsion system according to the invention. Similarly, terms such as "radial," "radially," "transverse," or the like refer to a direction lying in a plane substantially perpendicular to the direction of said engine axis.

In general, in the present description and the appended claims, terms such as "thrust reversal" and "thrust reverser" are to be understood as generally used in the relevant technical field, namely that of aircraft thrusters, and also include conditions, or systems designed to achieve such conditions, wherein the thrust reversal is only partial, i.e., not directed in the direction opposite to the direction of operation but also only directed in a non-axial direction relative to the thruster.

With reference to the figures, in general, the turbofan propulsion system according to the first aspect of the invention is indicated by the reference numeral 30, and the thrust reverser system is indicated by the reference numeral 60.

The turbofan propulsion system 30 essentially comprises a core engine 200, an engine nacelle 40, a bypass duct 430, the thrust reverser system 60, a pylon 20, and a pylon coupling system 160.

In a manner known per se, the core engine 200 is made as a conventional core engine of a turbofan propulsion system, so that it extends along an axial direction 10 and defines within it a first air flow path, typically a so-called "hot flow" of the turbofan propulsion system 30. Inside the core engine 200, in a conventionally known manner, there are arranged at least one compression stage, a combustion chamber, one or more expansion stages, and the exhaust nozzle 70.

The engine nacelle 40 comprises a front portion of the engine nacelle 50, downstream of which the thrust reverser system 60 is arranged.

The engine nacelle 40 is arranged at least partially around the core engine 200, and jointly defines therewith the bypass duct 430. In a manner known per se, the bypass duct 430 preferably has a cross-sectional area, in a plane transverse to the axial direction 10, that is either O-shaped or ring-shaped, or may comprise a pair of side-by-side C-shaped sections. The bypass duct 430 defines a second flow path for air, typically a so-called "cold flow" of the turbofan propulsion system 30.

The turbofan propulsion system 30 further comprises at least one fan arranged upstream of the core engine 200 and bypass duct 430 (known per se, and thus not shown in the figures) so as to provide one or more stages of compression of the incoming air flow.

As stated previously, the thrust reversal system 60 is arranged downstream of the front portion of the engine nacelle 50 and is connected thereto.

The thrust reverser system 60 comprises a fixed structure 80, which is mounted integral with the front portion of the engine nacelle 50 or is made integrally thereto, and a translating structure 90. The fixed structure 80 and the translating structure 90 are made as an ideal continuation of the front portion of the engine nacelle 50 to define therewith a flow path for air. The fixed structure 80 and the translating structure 90 are thus adapted to define therewith a sequential flow path for air. Both the fixed structure 80 and the translating structure 90 may, advantageously, be made in two portions, for example in two semi-annular halves, or in two C-shaped halves, to allow easy opening for inspection or maintenance.

The fixed structure 80 preferably has a connection ring 14 for connecting to a housing of the core engine 200 or the front portion of the engine nacelle 50, said connection ring 14 being arranged to support loads in the axial direction 10.

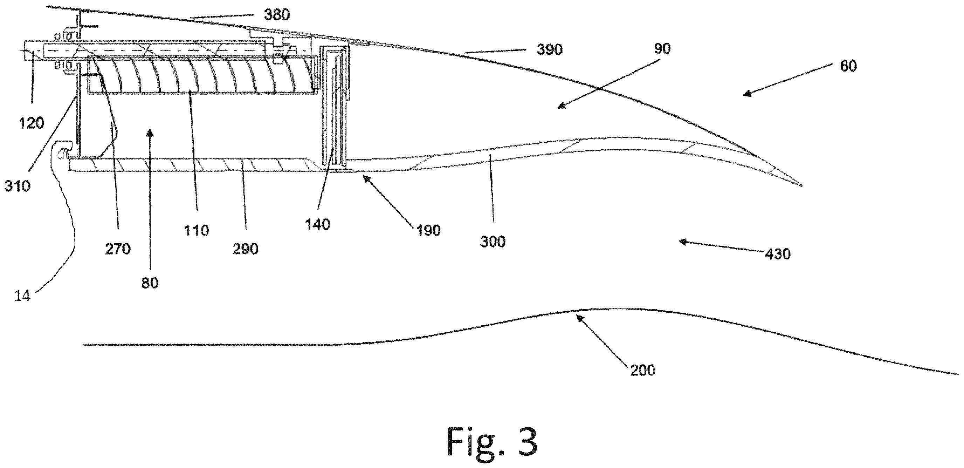

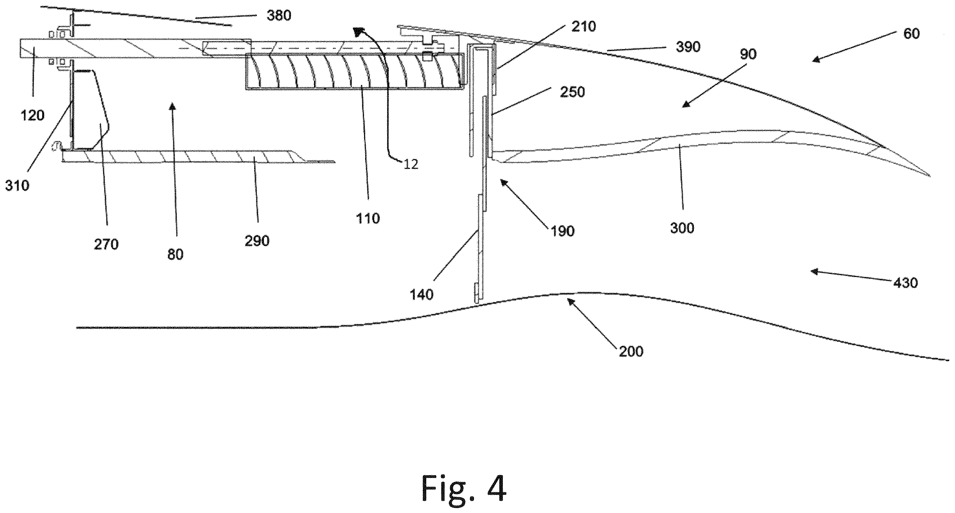

As seen in particular in Fig. 3 and 4, the fixed structure 80 may comprise a fixed outer panel 380, a fixed inner panel 290 (preferably acoustically treated), as well as a torsion box 270 that is generally known and thus not described in further detail.

The translating structure 90 may comprise, in a manner similar to the fixed structure 80, an outer translating panel 390 and an inner translating panel 300 (preferably acoustically treated).

The translating structure 90 is arranged slidable, or translatable, parallel to the axial direction 10 between a stowed position and an opening position. In the stowed position, the translating structure 90 is connected in a fluid-tight connection, advantageously by means of a dedicated gasket, with said fixed structure 80, substantially so as to define therewith, and with the front portion of the engine nacelle 50 connected thereto, a flow path for air. In the opening position, the translating structure 90 is, on the other hand, spaced apart from said fixed structure 80 in the axial direction 10. In this way, when the translating structure 90 is in the opening position, there is defined in the space between said fixed structure 80 and said translating structure 90 a circumferential opening 12, adapted to allow the outflow of air from said bypass duct 430 toward the external environment along a flow path at least partially non-parallel to the axial direction 10.

This sliding movement of the translating structure 90 with respect to the fixed structure 80 is driven by a first actuator mechanism 120, which is arranged to move the translating structure 90 from the stowed position to the opening position and vice versa. According to a preferred embodiment, said first actuator mechanism 120 comprises at least one conventional, hydraulic or electric linear actuator, preferably a pair of linear actuators, even more preferably a plurality of linear actuators, adapted to drive a translational movement along an axis of the actuator 100.

Advantageously, the thrust reverser system 60 further comprises at least one, and preferably a plurality of, outflow guides 110, also known as a "cascade." Said at least one outflow guide 110 is made, for example, as a slat, or a metal sheet. Preferably, the outflow guides 110 are arranged translationally integral with the translating structure 90, whereby, when the translating structure 90 is moved toward the opening position, said outflow guides 110 occupy at least partially the space between the translating structure 90 and the fixed structure 80, to guide the outflow of air from the bypass duct 430 to the external environment through the opening 12. Alternatively, the outflow guides 110 may be arranged integral with the fixed structure 80. Preferably, when the translating structure 90 is in the closed configuration, the outflow guides 110 are housed in a defined compartment between the fixed outer panel 380, the fixed inner panel 290, and a front frame 310.

The thrust reverser system 60 further comprises an iris mechanism 190, adapted to at least partially, and advantageously, completely, occlude the bypass duct 430; however, even in the case of "complete" occlusion of the bypass duct 430, a small air bleeding may exist in the radially innermost portion of the bypass duct 430, or the portion abutting the core engine 200, for a thickness generally less than a few millimeters. To this end, the iris mechanism 190 comprises a plurality of blades 140, said blades 140 being arranged for joint movement between a rest configuration, in which the free cross-sectional area of the bypass duct 430, or the free cross-sectional area of the bypass duct 430 in a plane substantially perpendicular or transverse to the axial direction 10, is at a maximum, and thus the blades 140 of the plurality of blades 140 jointly define an air passage; and a deployed configuration, in which the plurality of blades 140 is adapted to occlude at least partially the bypass duct 430, or said air passage, or is positioned to occlude the bypass duct 430 at least partially, and, advantageously, completely. Obviously, the invention is not limited to an iris mechanism 190 comprising the number of blades 140 shown in the figures, but may include any number of blades 140, even very different from that described or illustrated in the figures, without thereby departing from the scope of the invention as defined by the appended claims. For example, the iris mechanism 190 may include four blades, or eight blades, or even thirty-two blades, it being understood that such numbers are described herein by way of non-limiting example only.

Said iris mechanism 190 is, in the embodiment shown in the figures, mounted integral in translation with the translating structure 90 of the thrust reverser system 60. Alternatively, the iris mechanism 190 may be mounted integral with the fixed structure 80 of the thrust reverser system 60.

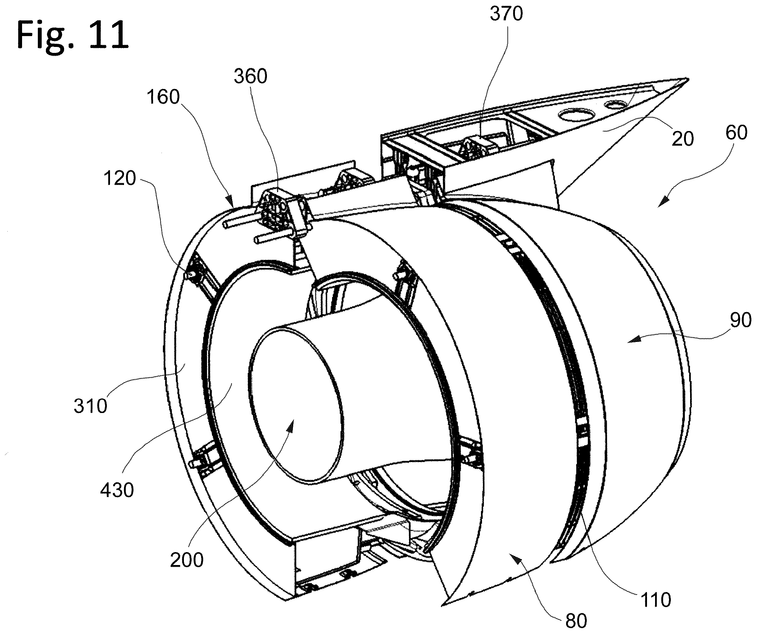

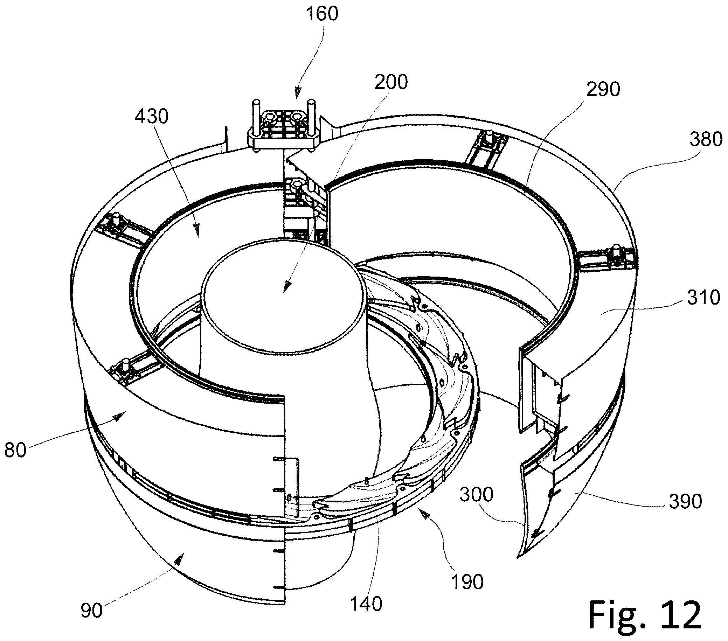

According to the invention, the iris mechanism 190 is permanently constrained to the pylon coupling system 160 (which will be described later) and it is adapted to be coupled to the translating structure 90 to make it integral in translation with said structure. By virtue of this configuration, it is possible, even in the case of a bypass duct with an O-shaped or ring-shaped cross section, to arrange the plurality of blades 140 in such a way that they are adapted, in the deployed configuration, to completely occlude the passage (unless, possibly, there is a minimal leakage in the radially innermost section), and at the same time to make both the translating structure 90 and the fixed structure 80 in two half-shells, or in two portions, for example in two semi-annular halves, or in two C-shaped halves, hinged on the same side, to allow easy opening for inspection or maintenance, as shown in Fig. 11 and 12.

As may be seen in the figures, in particular in Fig. 3 and 4, said iris mechanism 190 is preferably mounted so that the plurality of blades 140 are arranged in a plane substantially perpendicular to the axial direction 10.

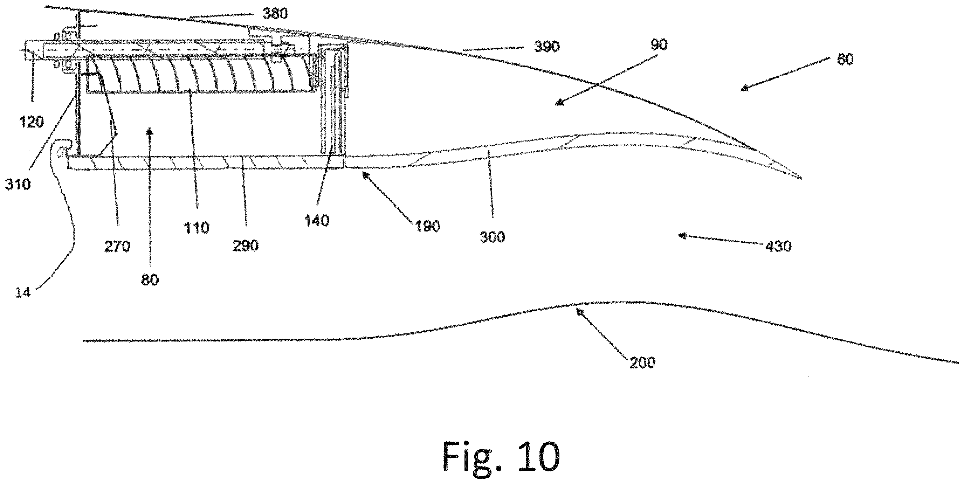

As is particularly visible in Fig. 3 and Fig. 10, advantageously, when the plurality of blades 140 is in the rest configuration, the iris mechanism 190 is arranged in a radially external position relative to the fixed inner panel 290, between the fixed inner panel 290 and the fixed outer panel 380, or it is substantially housed in the space contained between the fixed inner panel 290 and the fixed outer panel 380 of the fixed structure 80. Preferably, in this embodiment, the fixed inner panel 290 and the translating inner panel 300 face each other head-to-head, or are arranged at the same radial distance from the axial direction 10, or from the centerline of the core engine 200. Even more preferably, in such an embodiment, the fixed inner panel 290 and the translating inner panel 300 are provided with an inner sandwich structure, preferably more than 5 millimeters thick along the entire length of the panel, as visible in the embodiment shown in Fig. 10, to provide sufficient noise reduction.

Even if the blade structure 140 shown in the figures is planar, in an alternative embodiment of the invention, the blades 140 have a non-planar shape. For example, the iris mechanism 190 may be made in the form of a dome, preferably a spherical segment, and each blade 140 of the plurality of blades 140 may be made in the form of a curved panel adapted to cover only a portion of said dome. Again, in a further alternative embodiment, the iris mechanism 190 may be made in the form of a cone, having the apex of the cone oriented in the direction of, or in the direction opposite to, the airflow exit section from the bypass duct 430, in which case each blade 140 of the plurality of blades 140 of the iris mechanism 190 is made in the form of a curved panel adapted to cover a portion of said truncated cone.

In order to provide greater structural strength at least in the deployed configuration, in an advantageous embodiment, the adjacent blades 140 of the plurality of blades 140 overlap at least partially.

In order to provide greater structural strength, in a further advantageous embodiment, the blades 140 of the plurality of blades 140 of the iris mechanism 190 are made with a sandwich structure, even more preferably with a sandwich structure with composite materials. Alternatively, depending on the structural design requirements, the blades 140 may also be made as, or from, simple sheet metal structures.

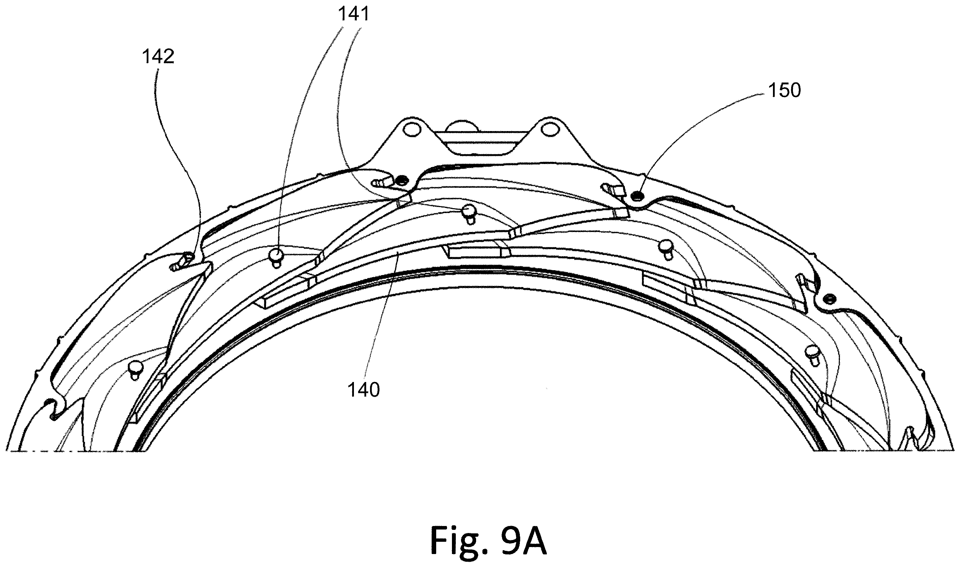

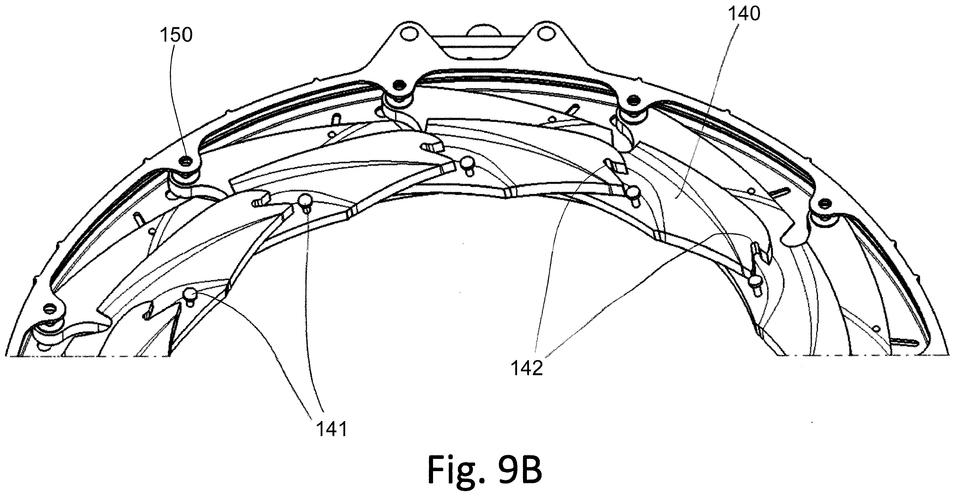

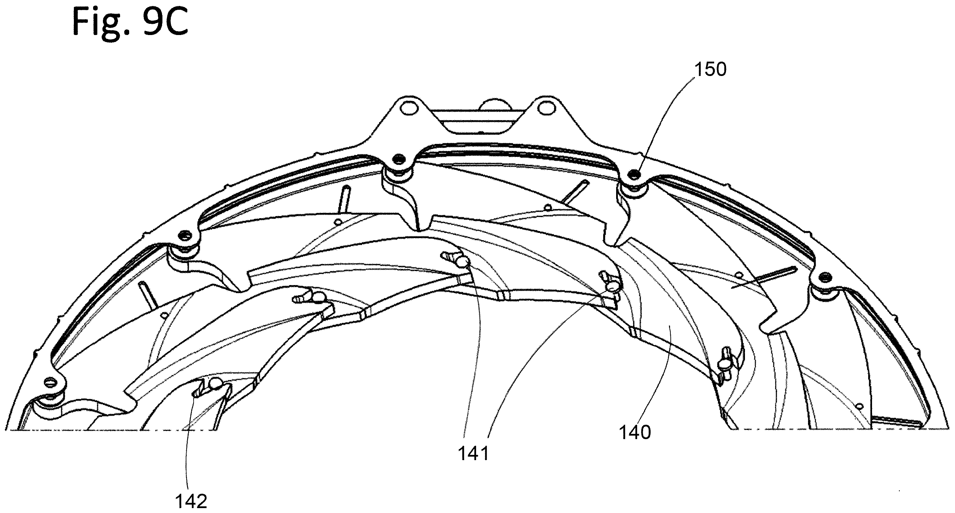

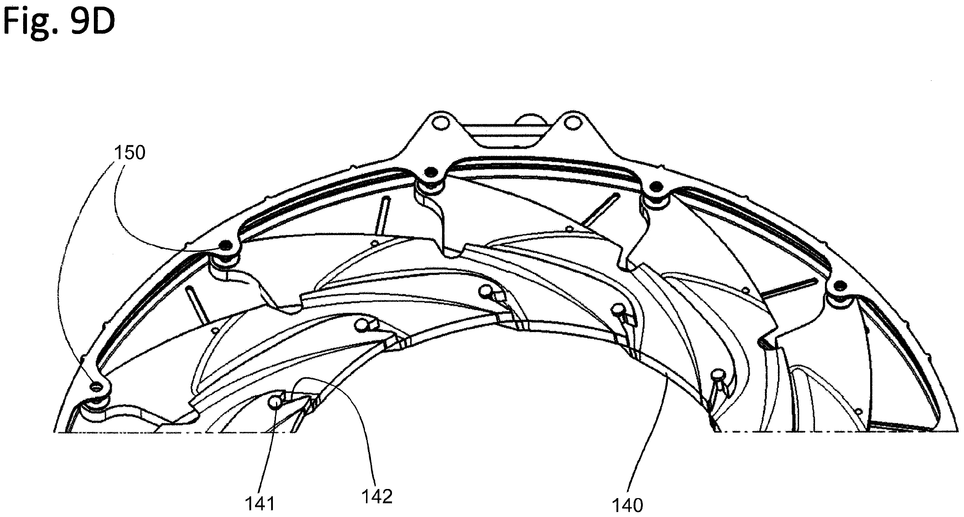

According to the invention, each blade 140 of the iris mechanism 190 has an arrangement of pins and recesses adapted to cooperate with a similar arrangement of blades 140 directly adjacent thereto, in such a way to allow locking adjacent blades 140 in the deployed configuration, with obvious advantages in terms of structural strength. In particular, as may be seen clearly in Fig. 9A through 9D, each blade 140 includes a pin 141 and a recess 142, which are arranged to cooperate with a recess 142 and a pin 141 of an adjacent blade, respectively. The position on each blade 140 of the pin 141 and the recess 142 is such that, when the iris mechanism 190 reaches a configuration with the plurality of fully deployed blades 140 (visible in Fig. 9D), the relative position of a pair of adjacent blades 140 ends up locked by the interlocking of the pin 141 of one in the recess 142 of the other one.

Advantageously, at least one blade 140 of the plurality of blades 140 of the iris mechanism has a control hole, which is adapted to allow controlling the aerodynamic transient during the movement of the iris mechanism 190 between the rest configuration and the deployed configuration.

In an embodiment, at least one blade 140 of the plurality of blades 140 of the iris mechanism has a service hole adapted to allow wiring or other structures or installations to pass through.

To drive the joint movement of the plurality of blades 140 of the iris mechanism 190 from the rest configuration to the deployed configuration, and vice versa, the thrust reverser system 60 further comprises a second actuator mechanism 170.

In the most preferred embodiment of the invention, the first actuator mechanism 120 and the second actuator mechanism 170 are arranged for coordinated drive such that:
- when the translating structure 90 of the thrust reverser system 60 is in the stowed position, the plurality of blades 140 of the iris mechanism 190 is in the rest configuration; and
- when the translating structure 90 of the thrust reverser system 60 is in the opening position, the plurality of blades 140 of the iris mechanism 190 is in the deployed configuration.

In an even more preferred embodiment of the invention, the first actuator mechanism 120 and the second actuator mechanism 170 are arranged for synchronized actuation such that the movement of the first actuator mechanism 120 causes the concurrent movement of the second actuator mechanism 170, and, consequently, the movement of the translating structure 90 of the thrust reverser system 60 from the stowed position to the opening position is matched by the similar movement of the plurality of blades 140 of the iris mechanism 190 from the rest configuration to the deployed configuration, and vice versa.

As may also be inferred from a comparison between Fig. 3 and Fig. 4, the length along the axial direction 10 of the fixed inner panel 290 and the fixed outer panel 380 is approximately equal to or nearly equal to (or at least on the same order of magnitude as) the stroke of the first actuator mechanism 120, or to the length in the axial direction of the opening 12 defined between the translating structure 90 and the fixed structure 80 when the translating structure 90 is in the opening position.

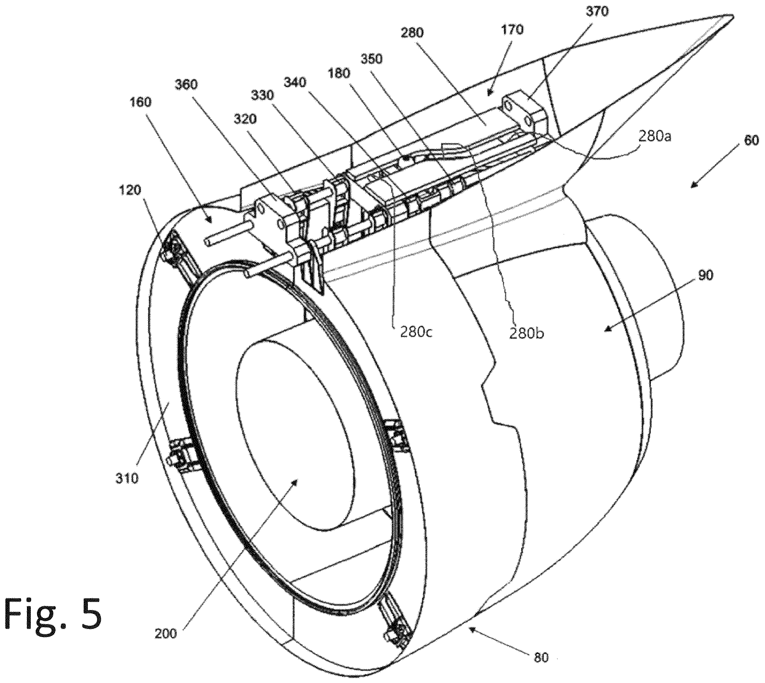

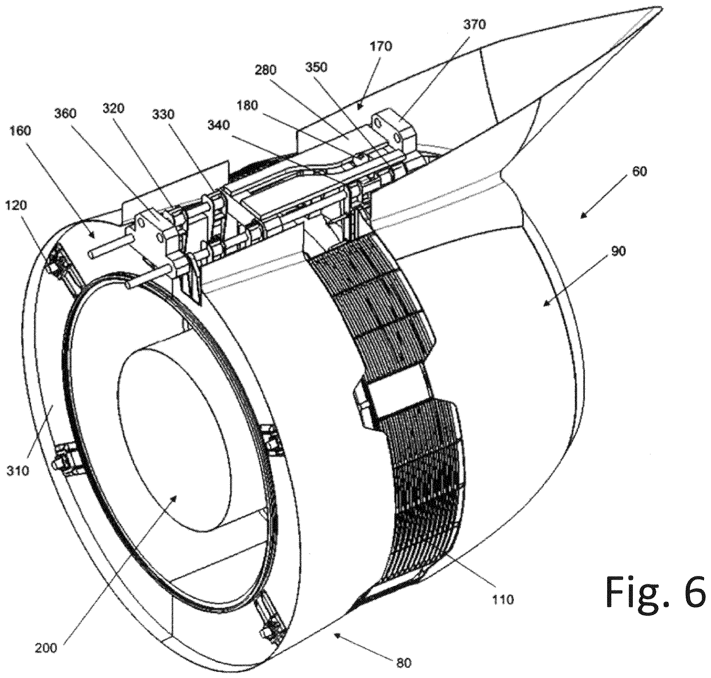

In a particularly preferred embodiment of the invention, the first actuator mechanism 120 comprises a runner 280 and a pin 180. The runner 280 has a first portion 280a extending parallel to said axial direction 10, and a second portion 280b extending non-parallel to said first portion 280a from said first portion 280a, as a continuation thereof. The pin 180, which may also be made in the form of a roller, is arranged integral in translation with the translating structure 90 of the thrust reverser system 60 and is mounted slidable inside the runner 280. In the same embodiment, the second actuator mechanism 170 comprises an actuation ring 250 adapted to rotatably draw said plurality of blades 140 of the iris mechanism 190 between said rest configuration and said deployed configuration. In this way, the pin 180 is arranged to rotatably draw said actuation ring 250 when the pin 180 is slid within said second portion 280b of said runner 280, for example when it is moved along the axial direction 10 by the action of the first actuator mechanism 120, and in particular of a linear actuator preferably part of said first actuator mechanism 120. Preferably, the runner 280 further comprises a third portion 280c, extending along a direction parallel to, and spaced apart from, said first portion 280a, from said second portion 280b, as a continuation thereof. In this way, the pin 180 may reach a locked end position when it has reached the end portion 280, or the third portion 280c of the runner 280, while ensuring that the angular position of the actuation ring 250, which defines the rest or deployed configuration of the plurality of blades 140, is stably maintained. Obviously, in an equivalent way, the second portion 280b of the runner 280 may also not be straight, and extend, for example, along a curve or a circumferential arc. Similarly, although in Fig. 5 and 6 the runner 280 shown extends entirely in a plane, it is also possible for the runner 280 to be spatially curved, for example at least in such a way that the first portion 280a and the second portion 280b extend over an ideally curved surface, for example a portion of a cylinder having its longitudinal axis coincident with the axial direction 10, in such a way as to allow a longer stroke of the pin 180 along the circumferential direction, and, consequently, to allow a wider angle of rotation for the actuation ring 250.

Alternatively, the mechanical connection between the first actuator mechanism 120 and the second actuator mechanism 170 may be provided by means of other types of transmission means, such as by gear or belt or chain mechanisms or other known mechanisms.

Alternatively, the first actuator mechanism 120 and the second actuator mechanism 170 may be made or constructed separately, i.e., without a mechanical connection between them, but rather arranged to be controlled simultaneously by the same electronic control unit (not shown, known per se), according to a coordinated or synchronized actuation program in ways similar to those just described.

In a further alternative embodiment, the first actuator mechanism 120 and the second actuator mechanism 170 may be arranged to be controlled by a common hydraulic, or pneumatic actuation, known per se and not further described in detail, advantageously so as to achieve coordinated or synchronized control in ways similar to those described above.

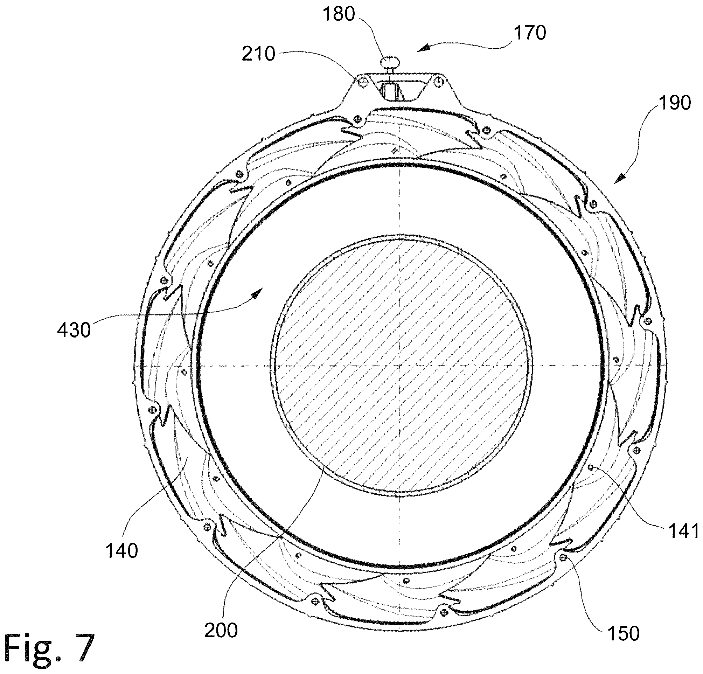

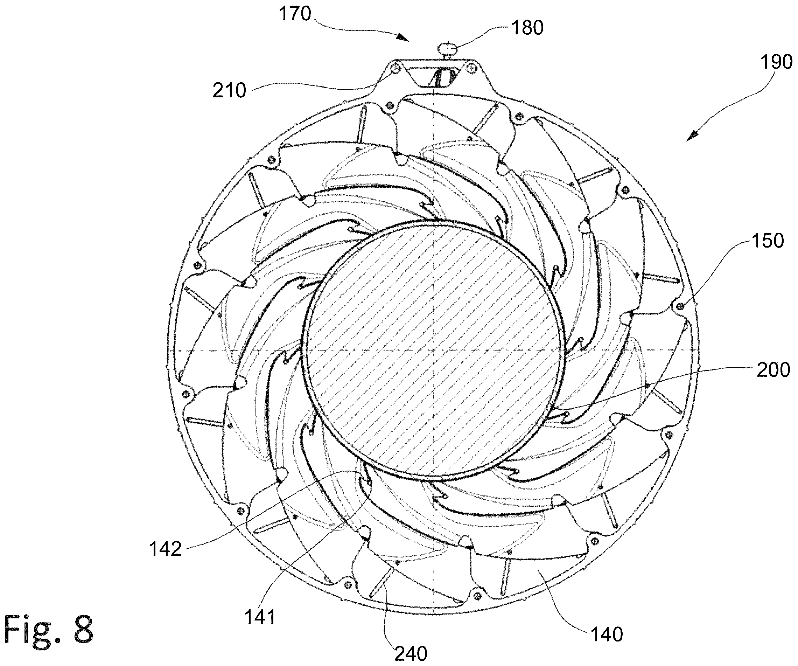

As shown in detail in Fig. 7, 8 and 9A through 9D, the iris mechanism 190 comprises, in addition to said actuation ring 250, a fixed ring 210. Each blade 140 of the plurality of blades 140 is hinged on a respective hinge 150 so as to be constrained to the fixed ring 210. A plurality of blade guides 230 are formed on the actuation ring 250, each associated with a respective blade 140.

The iris mechanism 190 further comprises a plurality of actuation pins 240, each actuation pin 240 being mounted slidably in a respective blade guide 230 and mounted integral with a respective blade 140.

Thus, as is evident to the person skilled in the art, the rotation of the actuation ring 250 about the axial direction 10, caused by the second actuator mechanism 170, corresponds to a rotation of each blade 140 of the plurality of blades 140 about the respective hinge 150. The joint and complete rotation of the plurality of blades 140 causes the iris mechanism to move between the aforementioned two rest and deployment configurations.

In a manner known per se, the turbofan propulsion system 30 may be coupled to an aircraft wing for support by means of a pylon 20. Said pylon 20 defines within it a cavity, in which, preferably, said runner 280 is fully accommodated.

Within said cavity of the pylon 20 is also housed a system for coupling to the pylon 160, adapted to suspend the thrust reverser system 60 to the pylon 20, and to allow at least a translational movement, along a direction parallel to the axial direction 10, of the translating structure 90 of the thrust reverser system 60 and of the components of the system integral to the structure.

The pylon coupling system 160 is constrained to the pylon 20 through fixed interfaces provided by a front pylon coupling 360 and a rear pylon coupling 370. The fixed structure 80 is constrained to the pylon coupling system 160 by means of a first hinge of the fixed structure 320 and a second hinge of the fixed structure 330. The translating structure 90 is constrained to the pylon coupling system 160 by means of a first hinge of the translating structure 340 and a second hinge of the translating structure 350. The iris mechanism 190 may be, in a non-limiting example, constrained to cylindrical guides of the pylon coupling system 160 so as to slide freely along them.

As mentioned previously, a method for reversing the thrust of the turbofan propulsion system 30 of an aircraft forms part of the invention. The method is applicable to the turbofan propulsion system 30 according to the invention, and comprises the steps of:
a) driving the sliding movement of the translating structure 90 of the thrust reverser system 60 from the stowed position to the opening position, so as to define said circumferential opening 12 between the translating structure 90 and the fixed structure 80, said opening 12 being adapted to allow the outflow of air from said bypass duct 430 to the external environment;
b) driving the joint movement of the plurality of blades 140 of the iris mechanism 190 from the rest configuration to the deployed configuration to arrange the plurality of blades 140 in such a way that said bypass duct 430 is at least partially occluded.

Preferably, the sliding movement of the translating structure 90 of the thrust reverser system 60 of said step a) and the joint movement of the plurality of blades 140 of the iris mechanism 190 of said step b) are performed in a coordinated manner. In this way, it is ensured that:
- when the translating structure 90 of the thrust reverser system 60 is in the stowed position, the plurality of blades 140 of the iris mechanism 190 is in the rest configuration; and
- when the translating structure 90 of the thrust reverser system 60 is in the opening position, the plurality of blades 140 of the iris mechanism 190 is in the deployed configuration.

In an even more preferable embodiment of the method according to the latter further aspect of the invention, the movement of the first actuator mechanism 120 and the movement of the second actuator mechanism 170 are performed synchronously so that the movement of the translating structure 90 of the thrust reverser system 60 from the stowed position to the opening position is matched by the similar movement of the plurality of blades 140 of the iris mechanism 190 from the rest configuration to the deployed configuration, and vice versa.

As may be seen from the foregoing description, by virtue of the turbofan propulsion system according to the invention, the objects of the above-described invention may be fully achieved, resulting in several advantages.

In particular, the invention provides a turbofan propulsion system having an improved thrust reverser system relative to the prior art.

Firstly, by virtue of the configuration of the iris mechanism, the thrust reverser system may occlude the bypass duct in the best way possible and reduce any airflow leakage to a minimum, or substantially to zero.

Further, by virtue of the advantageous ability to actuate in a coordinated, and even more preferably synchronized, manner, the movement of the translating structure of the thrust reverser system between the stowed and opening positions and the joint movement of the blades of the plurality of blades of the iris mechanism between the rest and deployed configurations, a more precise and better-timed thrust reversal effect may be achieved than in the prior art.

In addition, the reduction of the number of components, the number and complexity of aerodynamic discontinuities, and, most importantly, the weight of the thrust reverser system benefits the production, maintenance, and operation costs of a turbofan propulsion system, and allows for a significant reduction in the noise emission of such a propulsion system compared to the prior art by virtue of the increase in acoustically treatable surface area.

Moreover, such a configuration makes it possible to comply with safety requirements regarding unintentional actuation of the thrust reverser system. Indeed, by virtue of the configuration of the iris mechanism and the first actuator mechanism and the second actuator mechanism, it is easy for the person skilled in the art to integrate locking mechanisms in both the first and second actuator mechanisms, as well as in the fixed ring of the iris mechanism or in the runner or pin operatively connected thereto (in a way that is known per se and therefore not shown).

In addition, the possibility of accommodating the guide and the pylon coupling system entirely within a hollow space obtained inside the pylon connecting the turbofan propulsion system to the aircraft wing allows the aerodynamic shape of the engine nacelle to be improved and facilitates maintenance operations.

Lastly, constraining the iris mechanism permanently to the pylon coupling system and engageably to the translating structure makes it possible to simultaneously create a 360° iris mechanism, or one capable of occluding a bypass duct with an O-shaped or ring-shaped cross section, and, at the same time, to create both the translating and fixed structures in two half-shells, or in two portions, for example in two half-annular halves, or in two C-shaped halves, to facilitate opening for inspection or maintenance, as shown in Fig. 11 and 12.

Without prejudice to the principle of the invention, the embodiments and the details of construction may be widely varied with respect to that which has been described and illustrated purely by way of non-limiting example, without thereby departing from the scope of the invention as defined by the appended claims.

## Claims

1. Turbofan propulsion system (30) for an aircraft, the turbofan propulsive system (30) comprising:
- a core engine (200), extending along an axial direction (10), and adapted to define, internally, a first flow path for air;
- an engine nacelle (40), arranged at least partially around the core engine (200), and comprising a front portion of the engine nacelle (50);
- a bypass duct (430), comprised between the core engine (200) and the engine nacelle (40) and adapted to define a second flow path for air;
- a thrust reverser system (60) arranged downstream the front portion of the engine nacelle (50) of the engine nacelle (40), and the fixed structure (80) of the thrust reverser system (60) being arranged connected to said front portion of the engine nacelle (50); the thrust reverser system (60) comprising:
- a fixed structure (80) and a translating structure (90) adapted to define internally a sequential flow path for air, the translating structure (90) being arranged slidable along the axial direction (10) between a stowed position, wherein the translating structure (90) is sealingly connected to said fixed structure (80), and an open position, wherein the translating structure (90) is spaced apart from said fixed structure (80) in the axial direction (10) so as to define a circumferential opening (12) between said translating structure (90) and said fixed structure (80), said opening (12) being adapted to allow the outflow of air towards the external environment;
- an iris mechanism (190), comprising a plurality of blades (140) jointly movable between a rest configuration, wherein they jointly define a passage for air, and a deployed configuration wherein said plurality of blades (140) is adapted to at least partially occlude said passage;
- a pylon (20), adapted to support said turbofan propulsion system (30) by connecting said engine nacelle (40) to a wing of said aircraft;
- a pylon coupling system (160) adapted to suspend the thrust reverser system (60) to the pylon (20) and to allow a translation movement along a direction parallel to the axial direction (10) of the translating structure (90) of the thrust reverser system (60);
wherein the iris mechanism (190) is permanently constrained to the pylon coupling system (160) and is adapted to be connected to the translating structure (90) for translation with the latter; and
wherein each blade (140) of the iris mechanism (190) has at least one pin (141) and one recess (142) each adapted to cooperate with a recess (142) and pin (141) of adjacent blades, respectively, so that, in the deployed configuration, the relative position of the blades (140) is locked.

2. Turbofan propulsion system according to claim 1, wherein the plurality of blades (140) is adapted, in the deployed configuration, to completely occlude said passage.

3. Turbofan propulsion system according to claim 1 or claim 2, wherein the blades (140) of the plurality of blades (140) of the iris mechanism (190) are made with a sandwich structure.

4. Turbofan propulsion system according to any of the preceding claims, wherein the blades (140) of the plurality of blades (140) of the iris mechanism (190) have a non-planar shape, for example wherein the iris mechanism (190) is made in the form of a dome, preferably a spherical dome, and each blade (140) of the plurality of blades (140) of the iris mechanism (190) is made in the form of a curved panel adapted to cover a portion of said dome.

5. Turbofan propulsion system according to claim 4, wherein the iris mechanism (190) is made in the form of a truncated cone and each blade (140) of the plurality of blades (140) of the iris mechanism (190) is made in the form of a curved panel adapted to cover a portion of said truncated cone.

6. Turbofan propulsion system according to any of claims 1 to 3, wherein the plurality of blades (140) of the iris mechanism (190) is arranged in a plane substantially perpendicular to said axial direction (10).

7. Turbofan propulsion system according to any of the preceding claims, further comprising:
- a first actuator mechanism (120) adapted to drive the sliding movement of the translating structure (90) between said stowed position and said opening position; and
- a second actuator mechanism (170) adapted to drive the movement of said plurality of blades (140) of the iris mechanism (190) between said rest configuration and said deployed configuration;
wherein the first actuator mechanism (120) and the second actuator mechanism (170) are arranged for coordinated drive in such a way that:
- when said translating structure (90) is in said stowed position, said plurality of blades (140) of the iris mechanism (190) is in said rest configuration; and
- when said translating structure (90) is in said opening position, said plurality of blades (140) of the iris mechanism (190) is in said deployed configuration.

8. Turbofan propulsion system according to claim 7, wherein the first actuator mechanism (120) comprises:
- a runner (280), having a first portion (280a) extending parallel to said axial direction (10), and a second portion (280b) extending non-parallel to said first portion (280a) starting from said first portion (280a); and
- a pin (180) connected for translation with said translating structure (90), the pin (180) being arranged slidable inside said runner (280);
and wherein the second actuator mechanism (170) comprises:
- an actuation ring (250) adapted to drive in rotation said plurality of blades (140) of the iris mechanism (190) between said rest configuration and said deployed configuration, and vice versa;
wherein said pin (180) is arranged to drag into rotation said actuation ring (250) when the pin (180) is slid inside said second portion (280b) of said runner (280).

9. Turbofan propulsion system according to any of the preceding claims, further comprising a plurality of outflow guides (110), connected for translation with the translating structure (90), and adapted to guide the outflow of air towards the external environment through said circumferential opening (12) defined between said translating structure (90) and said fixed structure (80) when the translating structure (90) is in said opening position.

10. Turbofan propulsion system according to any of the preceding claims, wherein the blades (140) of the plurality of blades (140) in the rest configuration allow air to pass into the bypass duct (430), and in the deployed configuration occlude at least partially said air passage into the bypass duct (430).

11. Turbofan propulsion system according to claim 10, wherein said bypass duct (230), in a cross-sectional plane transverse to the axial direction (10), has a ring- or O-shaped cross section, and wherein said iris mechanism (190) is arranged coaxially to said bypass duct (430) whereby the plurality of blades (140) is adapted, in the deployed configuration, to completely occlude said bypass duct (430).

12. Turbofan propulsion system according to claim 8, **characterized in that** said guide (280) is entirely accommodated within said pylon (20).

13. Turbofan propulsion system according to any of the preceding claims, wherein the fixed structure (80) comprises a fixed outer panel (380) and a fixed inner panel (290), and wherein, when the plurality of blades (140) are in the rest configuration, the iris mechanism (190) is arranged in a radially external position relative to the fixed inner panel (290) between the fixed inner panel (290) and the fixed outer panel (380).

14. Turbofan propulsion system according to any of the preceding claims, wherein the fixed structure (80) and the translating structure (90) are made in two portions, for example in two semi-annular halves, or in two C-shaped halves, to allow easy opening for inspection or maintenance

15. Thrust reversal method for a turbofan propulsion system (30) according to any of the preceding claims, comprising the steps of:
a) driving the sliding movement of said translating structure (90) of the thrust reverser system (60) from said stowed position to said opening position, so as to define a circumferential opening (12) between said translating structure (90) and said fixed structure (80), said opening (12) being adapted to allow the outflow of air from said bypass duct (430) toward the external environment;
b) driving the joint movement of said plurality of blades (140) of the iris mechanism (190) from said rest configuration to said deployed configuration to arrange said plurality of blades (140) in such a way that they at least partially occlude said bypass duct (430).

16. Thrust reversal method according to claim 15, **characterized in that** the sliding movement of said translating structure (90) of the thrust reverser system (60) of said step a) and the joint movement of said plurality of blades (140) of the iris mechanism (190) of said step b) are carried out in a coordinated manner, in such a way that:
- when said translating structure (90) is in said stowed position, said plurality of blades (140) of the iris mechanism (190) is in said rest configuration; and
- when said translating structure (90) is in said opening position, said plurality of blades (140) of the iris mechanism (190) is in said deployed configuration.

## Patentansprüche

1. Turbofan-Antriebssystem (30) für ein Flugzeug, wobei das Turbofan-Antriebssystem (30) enthält:
- ein Kerntriebwerk (200), das sich entlang einer Axialrichtung (10) erstreckt und angepasst ist, intern einen ersten Strömungsweg für Luft zu definieren;
- eine Triebwerksgondel (40), die zumindest teilweise um das Kerntriebwerk (200) angeordnet ist und einen vorderen Bereich der Triebwerksgondel (50) enthält;
- einen Bypass-Kanal (430), der sich zwischen dem Kerntriebwerk (200) und der Triebwerksgondel (50) befindet und angepasst ist, einen zweiten Strömungsweg für Luft zu definieren;
- ein Schubumkehrsystem (60), das stromabwärts des vorderen Bereichs der Triebwerksgondel (50) von der Triebwerksgondel (40) angeordnet ist, und wobei die feste Struktur (80) des Schubumkehrsystems (60) an dem vorderen Bereich der Triebwerksgondel (50) angeordnet ist und verbunden ist; wobei das Schubumkehrsystem (60) enthält:
- eine feste Struktur (80) und eine verschiebbare Struktur (90), die angepasst sind, einen sequentiellen Strömungsweg für Luft zu definieren, wobei die verschiebbare Struktur (90) verschiebbar entlang der Axialrichtung (10) zwischen einer verstauten Position, in der die verschiebbare Struktur (90) dichtend mit der festen Struktur (80) verbunden ist, und einer offenen Position, in der die verschiebbare Struktur (90) von der festen Struktur in der Axialrichtung (10) beabstandet ist, so dass eine Umfangsöffnung (12) zwischen der verschiebbaren Struktur (90) und der festen Struktur (80) definiert wird, angeordnet ist, wobei die Öffnung (12) angepasst ist, dass das Ausströmen von Luft zur äußeren Umgebung ermöglicht wird;
- einen Blendenmechanismus (190), der eine Mehrzahl von Blenden (140) enthält, die gemeinsam zwischen einer Ruhekonfiguration, in der sie gemeinsam einen Durchlass für Luft definieren, und einer entfalteten Konfiguration, in der die Mehrzahl von Blenden (140) angepasst ist, den Durchlass zumindest teilweise zu verschließen, bewegbar sind;
- einen Pylon (20), der angepasst ist, das Turbofan-Antriebssystem (30) durch Verbinden der Triebwerksgondel (40) mit einem Flugzeugflügel zu stützen;
- ein Pylonverbindungssystem (160), das angepasst ist, das Schubumkehrsystem (60) an dem Pylon (20) aufzuhängen und eine Verschiebebewegung entlang einer Richtung parallel zu der Axialrichtung (10) der verschiebbaren Struktur (90) des Schubumkehrsystems (60) zu ermöglichen;
wobei der Blendenmechanismus (190) permanent zu dem Pylonverbindungssystem (160) vorgespannt ist und angepasst ist, mit der verschiebbaren Struktur (90) zum Verschieben mit dieser verbunden zu werden; und
wobei jede Blende (140) des Blendenmechanismus (190) mindestens einen Stift (141) und eine Aussparung (142) hat, die jeweils angepasst sind, mit einer Aussparung (142) bzw. einem Stift (141) von benachbarten Blenden zusammenzuwirken, so dass die Relativposition der Blenden (140) in der entfalteten Konfiguration arretiert ist.

2. Turbofan-Antriebssystem nach Anspruch 1, wobei die Mehrzahl von Blenden (140) angepasst ist, in der entfalteten Konfiguration den Durchlass komplett zu verschließen.

3. Turbofan-Antriebssystem nach Anspruch 1 oder Anspruch 2, wobei die Blenden (140) der Mehrzahl von Blenden (140) des Blendenmechanismus (190) mit einer Sandwich-Struktur gebildet sind.

4. Turbofan-Antriebssystem nach einem der vorhergehenden Ansprüche, wobei die Blenden (140) der Mehrzahl von Blenden (140) des Blendenmechanismus (190) eine nicht-planare Form haben, beispielsweise wobei der Blendenmechanismus (190) in der Form einer Kuppel ist, vorzugsweise einer sphärischen Kuppel, und jede Blende (140) der Mehrzahl von Blenden (140) des Blendenmechanismus (190) in der Form eines gekrümmten Panels gebildet ist, das angepasst ist, einen Bereich der Kuppel zu bedecken.

5. Turbofan-Antriebssystem nach Anspruch 4, wobei der Blendenmechanismus (190) in der Form eines Kegelstumpfs ist, und jede Blende (140) der Mehrzahl von Blenden (140) des Blendenmechanismus (190) in der Form eines gekrümmten Panels gebildet ist, das angepasst ist, einen Bereich des Kegelstumpfs zu bedecken.

6. Turbofan-Antriebssystem nach einem der Ansprüche 1 bis 3, wobei die Mehrzahl der Blenden (140) des Blendenmechanismus (190) in einer Ebene im Wesentlichen senkrecht zu der Axialrichtung (10) angeordnet ist.

7. Turbofan-Antriebssystem nach einem der vorhergehenden Ansprüche, weiter enthaltend:
- einen ersten Betätigungsmechanismus (120), der angepasst ist, die Verschiebebewegung der verschiebbaren Struktur (90) zwischen der verstauten Position und der Öffnungsposition anzutreiben; und
- einen zweiten Betätigungsmechanismus (170), der angepasst ist, die Bewegung der Mehrzahl von Blenden (140) des Blendenmechanismus (190) zwischen der Ruhekonfiguration und der entfalteten Konfiguration anzutreiben;
wobei der erste Betätigungsmechanismus (120) und der zweite Betätigungsmechanismus (170) zu einem koordinierten Antrieb angeordnet sind, so dass:
- wenn sich die verschiebbare Struktur (90) in der verstauten Position befindet, die Mehrzahl von Blenden (140) des Blendenmechanismus (190) sich in der Ruhekonfiguration befindet; und
- wenn sich die verschiebbare Struktur (90) in der Öffnungsposition befindet, die Mehrzahl von Blenden (140) des Blendenmechanismus (190) sich in der entfalteten Konfiguration befindet.

8. Turbofan-Antriebssystem nach Anspruch 7, wobei der erste Betätigungsmechanismus (120) enthält:
- eine Führungsschiene (280), die einen ersten Bereich (290a), der sich parallel zu der Axialrichtung (10) erstreckt, und einen zweiten Bereich (280b), der sich nicht-parallel zu dem ersten Bereich (280a) erstreckt und von dem ersten Bereich (280a) ausgeht, aufweist; und
- einen Stift (180), der mit der verschiebbaren Struktur (90) zur Verschiebung verbunden ist, wobei der Stift (180) verschiebbar in der Führungsschiene (280) angeordnet ist;
und wobei der zweite Betätigungsmechanismus (170) enthält:
- einen Betätigungsring (250), der angepasst ist, die Mehrzahl von Blenden (140) des Blendenmechanismus (190) zur Rotation zwischen der Ruhekonfiguration und der entfalteten Konfiguration und umgekehrt anzutreiben;
wobei der Stift (180) angeordnet ist, dass er den Betätigungsring (250) in die Rotation zieht, wenn der Stift (180) in den zweiten Bereich (280b) der Führungsschiene (280) geschoben ist.

9. Turbofan-Antriebssystem nach einem der vorhergehenden Ansprüche, weiter enthaltend eine Mehrzahl von Ausströmungsführungen (110), die mit der verschiebbaren Struktur (90) zur Verschiebung verbunden sind und die angepasst sind, die Ausströmung von Luft in Richtung der Außenumgebung durch die Umfangsöffnung (12), die zwischen der verschiebbaren Struktur (90) und der festen Struktur (80) definiert ist, zu lenken, wenn die verschiebbare Struktur (90) in der Öffnungsposition ist.

10. Turbofan-Antriebssystem nach einem der vorhergehenden Ansprüche, wobei die Blenden (140) der Mehrzahl von Blenden (140) in der Ruhekonfiguration es ermöglichen, dass Luft in den Bypass-Kanal (430) gelangt, und in der entfalteten Konfiguration zumindest teilweise den Luftdurchlass in den Bypass-Kanal (430) verschließen.

11. Turbofan-Antriebssystem nach Anspruch 10, wobei der Bypass-Kanal (430) in einer Querschnittsebene senkrecht zu der Axialrichtung (10) einen ringförmigen oder O-förmigen Querschnitt hat, und wobei der Blendenmechanismus (190) koaxial zu dem Bypass-Kanal (430) angeordnet ist, wobei die Mehrzahl von Blenden (140) angepasst ist, in der entfalteten Konfiguration den Bypass-Kanal (430) vollständig zu verschließen.

12. Turbofan-Antriebssystem nach Anspruch 8, **dadurch gekennzeichnet, dass** die Führung (280) vollständig innerhalb des Pylons (20) untergebracht ist.

13. Turbofan-Antriebssystem nach einem der vorhergehenden Ansprüche, wobei die feste Struktur (80) ein festes äußeres Panel (380) und ein festes inneres Panel (290) enthält, und wobei der Blendenmechanismus (190) in einer radial außerhalb liegenden Position relativ zu dem festen inneren Panel (290) zwischen dem festen inneren Panel (290) und dem festen äußeren Panel (380) angeordnet ist, wenn die Mehrzahl von Blenden (140) in der Ruhekonfiguration sind.

14. Turbofan-Antriebssystem nach einem der vorhergehenden Ansprüche, wobei die feste Struktur (80) und die verschiebbare Struktur (90) in zwei Bereichen ausgebildet sind, zum Beispiel in zwei halb-ringförmigen Hälften oder in zwei C-förmigen Hälften, dass eine einfache Öffnung zur Inspektion oder Wartung möglich ist.

15. Schubumkehrverfahren für ein Turbofan-Antriebssystem (30) nach einem der vorhergehenden Ansprüche, enthaltend die Schritte:
a) Antreiben der Verschiebebewegung der verschiebbaren Struktur (90) des Schubumkehrsystems (60) von der verstauten Position in die Öffnungsposition, so dass eine Umfangsöffnung (12) zwischen der verschiebbaren Struktur (90) und der festen Struktur (80) definiert wird, wobei die Öffnung (12) angepasst ist, ein Ausströmen von Luft aus dem Bypass-Kanal (430) zur Außenumgebung zu ermöglichen;
b) Antreiben der gemeinsamen Bewegung der Mehrzahl an Blenden (140) des Blendenmechanismus (190) von der Ruhekonfiguration in die entfaltete Konfiguration zum Anordnen der Mehrzahl von Blenden (140) derart, dass sie zumindest teilweise den Bypass-Kanal (430) verschließen.

16. Schubumkehrverfahren nach Anspruch 15, **dadurch gekennzeichnet, dass** die Verschiebebewegung der verschiebbaren Struktur (90) des Schubumkehrsystems (60) aus Schritt a) und die gemeinsame Bewegung der Mehrzahl von Blenden (140) des Blendenmechanismus (190) aus Schritt b) in einer koordinierten Weise ausgeführt werden, so dass:
- wenn die verschiebbare Struktur (90) in der verstauten Position ist, die Mehrzahl von Blenden (140) des Blendenmechanismus (190) in der Ruhekonfiguration ist; und
- wenn die verschiebbare Struktur (90) in der Öffnungsposition ist, die Mehrzahl von Blenden (140) des Blendenmechanismus (190) in der entfalteten Konfiguration ist.

## Revendications

1. Système de propulsion à turbosoufflante (30) pour un aéronef, le système de propulsion à turbosoufflante (30) comprenant :
- un moteur central (200), s'étendant le long d'une direction axiale (10), et adapté pour définir, en interne, un premier trajet d'écoulement d'air ;
- un fuseau moteur (40), agencé au moins partiellement autour du moteur central (200), et comprenant une partie avant du fuseau moteur (50) ;
- un conduit de dérivation (430), compris entre le moteur central (200) et le fuseau moteur (40) et adapté pour définir un second trajet d'écoulement d'air ;
- un système inverseur de poussée (60) agencé en aval de la partie avant du fuseau moteur (50) du fuseau moteur (40), et la structure fixe (80) du système inverseur de poussée (60) étant agencée en étant reliée à ladite partie avant du fuseau moteur (50) ; le système inverseur de poussée (60) comprenant :
- une structure fixe (80) et une structure de translation (90) adaptées pour définir en interne un trajet d'écoulement d'air séquentiel, la structure de translation (90) étant agencée de manière à pouvoir coulisser le long de la direction axiale (10) entre une position repliée, dans laquelle la structure de translation (90) est reliée hermétiquement à ladite structure fixe (80), et une position ouverte, dans laquelle la structure de translation (90) est espacée de ladite structure fixe (80) dans la direction axiale (10) de manière à définir une ouverture circonférentielle (12) entre ladite structure de translation (90) et ladite structure fixe (80), ladite ouverture (12) étant adaptée pour permettre l'écoulement d'air sortant vers l'environnement externe ;
- un mécanisme d'iris (190), comprenant une pluralité de pales (140) mobiles conjointement entre une configuration de repos, dans laquelle elles définissent conjointement un passage d'air, et une configuration déployée, dans laquelle ladite pluralité de pales (140) sont adaptées pour occlure au moins partiellement ledit passage ;
- un pylône (20), adapté pour supporter ledit système de propulsion à turbosoufflante (30) en reliant ledit fuseau moteur (40) à une aile dudit aéronef ;
- un système de couplage de pylône (160) adapté pour suspendre le système inverseur de poussée (60) au pylône (20) et pour permettre un mouvement de translation le long d'une direction parallèle à la direction axiale (10) de la structure de translation (90) du système inverseur de poussée (60) ;
dans lequel le mécanisme d'iris (190) est contraint de manière permanente au système de couplage de pylône (160) et est adapté pour être relié à la structure de translation (90) pour une translation avec celui-ci ; et
dans lequel chaque pale (140) du mécanisme d'iris (190) comporte au moins une broche (141) et un évidement (142) qui sont chacun adaptés pour coopérer respectivement avec un évidement (142) et une broche (141) de pales adjacentes, de sorte que, dans la configuration déployée, la position relative des pales (140) soit verrouillée.

2. Système de propulsion à turbosoufflante selon la revendication 1, dans lequel la pluralité de pales (140) sont adaptées, dans la configuration déployée, pour occlure complètement ledit passage.

3. Système de propulsion à turbosoufflante selon la revendication 1 ou la revendication 2, dans lequel les pales (140) de la pluralité de pales (140) du mécanisme d'iris (190) sont constituées d'une structure en sandwich.

4. Système de propulsion à turbosoufflante selon l'une quelconque des revendications précédentes, dans lequel les pales (140) de la pluralité de pales (140) du mécanisme d'iris (190) présentent une forme non plane, par exemple dans lequel le mécanisme d'iris (190) est constitué en forme de dôme, de préférence en forme sphérique, et chaque pale (140) de la pluralité de pales (140) du mécanisme d'iris (190) est constituée en forme de panneau incurvé adapté pour recouvrir une partie dudit dôme.

5. Système de propulsion à turbosoufflante selon la revendication 4, dans lequel le mécanisme d'iris (190) est constitué en forme de cône tronqué et chaque pale (140) de la pluralité de pales (140) du mécanisme d'iris (190) est constituée en forme de panneau incurvé adapté pour recouvrir une partie dudit cône tronqué.

6. Système de propulsion à turbosoufflante selon l'une quelconque des revendications 1 à 3, dans lequel la pluralité de pales (140) du mécanisme d'iris (190) sont agencées dans un plan sensiblement perpendiculaire à ladite direction axiale (10).

7. Système de propulsion à turbosoufflante selon l'une quelconque des revendications précédentes, comprenant en outre :
- un premier mécanisme actionneur (120) adapté pour entraîner le mouvement coulissant de la structure de translation (90) entre ladite position repliée et ladite position d'ouverture ; et
- un second mécanisme actionneur (170) adapté pour entraîner le mouvement de ladite pluralité de pales (140) du mécanisme d'iris (190) entre ladite configuration de repos et ladite configuration déployée ;
dans lequel le premier mécanisme actionneur (120) et le second mécanisme actionneur (170) sont agencés pour un entraînement coordonné de telle manière que :
- lorsque ladite structure de translation (90) est dans ladite position repliée, ladite pluralité de pales (140) du mécanisme d'iris (190) sont dans ladite configuration de repos ; et
- lorsque ladite structure de translation (90) est dans ladite position d'ouverture, ladite pluralité de pales (140) du mécanisme d'iris (190) sont dans ladite configuration déployée.

8. Système de propulsion à turbosoufflante selon la revendication 7, dans lequel le premier mécanisme actionneur (120) comprend :
- un coulisseau (280), comportant une première partie (280a) s'étendant parallèlement à ladite direction axiale (10), et une seconde partie (280b) s'étendant non parallèlement à ladite première partie (280a) à partir de ladite première partie (280a) ; et
- une broche (180) reliée pour une translation avec ladite structure de translation (90), la broche (180) étant agencée pour pouvoir coulisser à l'intérieur dudit coulisseau (280) ;
et dans lequel ledit second mécanisme actionneur (170) comprend :
- un anneau d'actionnement (250) adapté pour entraîner en rotation ladite pluralité de pales (140) du mécanisme d'iris (190) entre ladite configuration de repos et ladite configuration déployée, et vice versa ;
dans lequel ladite broche (180) est agencée pour faire glisser en rotation ledit anneau d'actionnement (250) lorsque la broche (180) coulisse à l'intérieur de ladite seconde partie (280b) dudit coulisseau (280).

9. Système de propulsion à turbosoufflante selon l'une quelconque des revendications précédentes, comprenant en outre une pluralité de guides d'écoulement sortant (110), reliés pour une translation avec la structure de translation (90), et adaptés pour guider l'écoulement d'air sortant vers l'environnement externe à travers ladite ouverture circonférentielle (12) définie entre ladite structure de translation (90) et ladite structure fixe (80) lorsque la structure de translation (90) est dans ladite position d'ouverture.

10. Système de propulsion à turbosoufflante selon l'une quelconque des revendications précédentes, dans lequel les pales (140) de la pluralité de pales (140), dans la configuration de repos, permettent le passage d'air dans le conduit de dérivation (430) et, dans la configuration déployée, occluent au moins partiellement ledit passage d'air dans le conduit de dérivation (430).

11. Système de propulsion à turbosoufflante selon la revendication 10, dans lequel ledit conduit de dérivation (230), dans un plan en coupe transversale qui est transversal à la direction axiale (10), présente une coupe transversale en forme d'anneau ou de O, et dans lequel ledit mécanisme d'iris (190) est agencé coaxialement audit conduit de dérivation (430) de telle manière que la pluralité de pales (140) soient adaptées, dans la configuration déployée, pour occlure complètement ledit conduit de dérivation (430).

12. Système de propulsion à turbosoufflante selon la revendication 8, **caractérisé en ce que** ledit guide (280) est entièrement logé à l'intérieur dudit pylône (20).

13. Système de propulsion à turbosoufflante selon l'une quelconque des revendications précédentes, dans lequel la structure fixe (80) comprend un panneau extérieur fixe (380) et un panneau intérieur fixe (290) et dans lequel, lorsque la pluralité de pales (140) sont dans la configuration de repos, le mécanisme d'iris (190) est agencé dans une position radialement externe par rapport au panneau intérieur fixe (290) entre le panneau intérieur fixe (290) et le panneau extérieur fixe (380).

14. Système de propulsion à turbosoufflante selon l'une quelconque des revendications précédentes, dans lequel la structure fixe (80) et la structure de translation (90) sont constituées de deux parties, par exemple en deux moitiés semi-annulaires, ou en deux moitiés en forme de C, pour permettre l'ouverture facile à des fins d'inspection ou de maintenance.

15. Procédé d'inversion de poussée pour un système de propulsion à turbosoufflante (30) selon l'une quelconque des revendications précédentes, comprenant les étapes suivantes :
a) l'entraînement du mouvement coulissant de ladite structure de translation (90) du système inverseur de poussée (60) de ladite position repliée à ladite position d'ouverture, de manière à définir une ouverture circonférentielle (12) entre ladite structure de translation (90) et ladite structure fixe (80), ladite ouverture (12) étant adaptée pour permettre l'écoulement d'air sortant dudit conduit de dérivation (430) vers l'environnement externe ;
b) l'entraînement du mouvement commun de ladite pluralité de pales (140) du mécanisme d'iris (190) de ladite configuration de repos à ladite configuration déployée pour agencer ladite pluralité de pales (140) de telle manière qu'elles puissent occlure au moins partiellement ledit conduit de dérivation (430).

16. Procédé d'inversion de poussée selon la revendication 15, **caractérisé en ce que** le mouvement coulissant de ladite structure de translation (90) du système inverseur de poussée (60) de ladite étape a) et le mouvement commun de ladite pluralité de pales (140) du mécanisme d'iris (190) de ladite étape b) sont réalisés d'une manière coordonnée, de telle manière que :
- lorsque ladite structure de translation (90) est dans ladite position repliée, ladite pluralité de pales (140) du mécanisme d'iris (190) soient dans ladite configuration de repos ; et
- lorsque ladite structure de translation (90) est dans ladite position d'ouverture, ladite pluralité de pales (140) du mécanisme d'iris (190) soient dans ladite configuration déployée.
